# EUROPEAN PATENT SPECIFICATION

(11) **EP 0 616 578 B1**
(45) Date of publication and mention of the grant of the patent: **14.02.1996**
(21) Application number: 93901410.6
(22) Date of filing: 09.12.1992
(51) Int. Cl.: B60R 21/26, F42B 3/04

(54) **HYBRID INFLATOR**
HYBRIDE AUFBLASVORRICHTUNG
GONFLEUR HYBRIDE

(30) Priority: 17.12.1991 US 808781
(43) Date of publication of application: 28.09.1994
(73) Proprietor: BENDIX-ATLANTIC INFLATOR COMPANY, Morristown, NJ 07962-2245 (US)
(72) Inventor: FRANTOM, Richard, Louis, Richmond, MI 48062 (US); BISHOP, Robert, John, Sterling Heights, MI 48313 (US); KREMER, Robert, Max, Fraser, MI 48026 (US); OCKER, Klaus, Friedrich, Fraser, MI 48026 (US); WOODS, Charles, David, Gainesville, VA 22065 (US); RENFROE, Donald, Wadsworth, Haymarket, VA 22069 (US); ROSE, James, Michael, Fairfax, VA 22033 (US); BAZEL, Teresa, Lorraine, Centreville, VA 22020 (US); BROWN, Roy, Glenn, Hot Springs, AR 71913 (US)
(74) Representative: W.P. THOMPSON & CO.
(86) International application number: US9210570
(87) International publication number: WO9311973

(56) References cited:
- FR-A- 2 171 107
- US-A- 3 877 721
- US-A- 3 910 596
- US-A- 5 031 932
- US-A- 5 076 607

## Description

### BACKGROUND AND SUMMARY THE INVENTION

The present invention generally relates to an inflator for an air bag or cushion and more specifically to the type of inflator known as a hybrid inflator.

It is known that if the early inflation rate of an air bag is too high, the resulting deployment forces can contribute to the possible injury of an occupant who is out of the normal seated (either driver or passenger) position. If, however, the air bag inflation rate is maintained at a relatively low value, primarily to reduce such deployment forces, full deployment of the air bag may not be timely achieved.

It has for some time been appreciated that one goal of air bag inflator design is to provide an inflator which initially has a relatively low or soft inflation rate (for a relatively few milliseconds) primarily to protect the out-of-position passenger, such as a standing child, who would be subject to large deployment forces and thereafter to rapidly increase the inflation rate of the air bag to cause rapid and full inflation. The prior art shows techniques for achieving this staged (bi-level) inflation of an air bag by utilizing an inflator which is capable of producing inflation gases with at least a low and a higher rate of gas production. With regard to air bag inflators generally, whether they are of the hybrid or stored gas variety or of the solid propellant (typically sodium azide) variety is the inclusion of an initiator or squib and a mass of gas producing or propellant material. As is known in the art and in response to a crash signal, the squib (or initiator) is activated which in turn causes the propellant material to burn. In the case of a hybrid inflator the purpose of the propellant material is to heat the stored inflation gas thereby increasing the effective, released volume of same while also increasing the rate of egress of the inflation gases from a pressure tank. In this case heated, stored gas is the primary source of inflation gases. In the solid propellant type of inflator, the squib causes the propellant to burn, the purpose of which is to generate a relatively inert, large volume of inflation gases.

In order to achieve the above-mentioned staged, variable inflation rate for an inflator, the prior art has proposed using a plurality of detonating devices to sequentially open restricted and unrestricted flow paths (see United States Patent 3,741,580). Another type of device for generating the staged inflation has been proposed in United States Patent 3,774,807, wherein upon activation of a single detonating element a piston moves to uncover a flow passage permitting the cold egress of stored gas from a pressure tank, thereafter the piston is used to detonate a quantity of propellant which in turn heats the stored gases prior to exiting the inflator. Instead of selectively opening a flow port as described above, United States Patent 3,948,540 shows the technique of using a spear thrower mechanism which punctures a sheer disk to permit stored gas to flow through various exit ports and inflate the air bag. Still another technique to provide the staged inflation is to use a dual electro explosive device system wherein one detonator is used to rupture a disk which initially permits the stored gas to flow into the air bag and shortly thereafter to energize the second initiator which causes the propellant to burn and as such increases the rate at which gases exit the inflator. Of the patents illustrative of inflators using two or more electro explosive elements are 3,972,545; 4,007,685; 4,136,894; and 4,358,998. Additional patents which utilize variable orifice devices are 4,006,919; 4,018,457; 4,021,058; 4,203,616; 4,268,065 and 4,619,285. Other devices utilizing sliding members or disk piercing mechanisms are: 3,910,596; 3,948,540; 3,966,226; and 4,771,914. The later published EP-A-0 558 651 represents the closest prior art according to Art.54(3) EPC, but is not relevant to the question of inventive step.

It is an object of the present invention to provide an inflator for providing gases to inflate an air bag having a single electrically responsive squib and one primary quantity of propellant material in order to achieve a dual or staged inflation rate of the air bag.

This object is achieved by the features of claim 1.

Many other objects and purposes of the invention will be clear from the following detailed description of the drawings.

### BRIEF DESCRIPTION OF THE DRAWINGS

In the drawings:
FIGURE 1 illustrates a cross-sectional view of the present invention.
FIGURE 2 illustrates an exploded view of a portion of FIGURE 1.
FIGURE 3 illustrates an alternate embodiment of the invention.
FIGURE 4 illustrates an exploded view of a portion of FIGURE 1.
FIGURE 5 illustrates pressure-time profiles.
FIGURE 6 illustrates an alternate embodiment of the hybrid inflator.
FIGURE 7 illustrates an isolated view of a sleeve and piston.
FIGUREs 8 thru 10 illustrate various views of a rupture disk.
FIGUREs 11 and 12 illustrate various views of the piston.
FIGURE 13 illustrates the piston is its forward position.

### DETAILED DESCRIPTION OF THE DRAWINGS

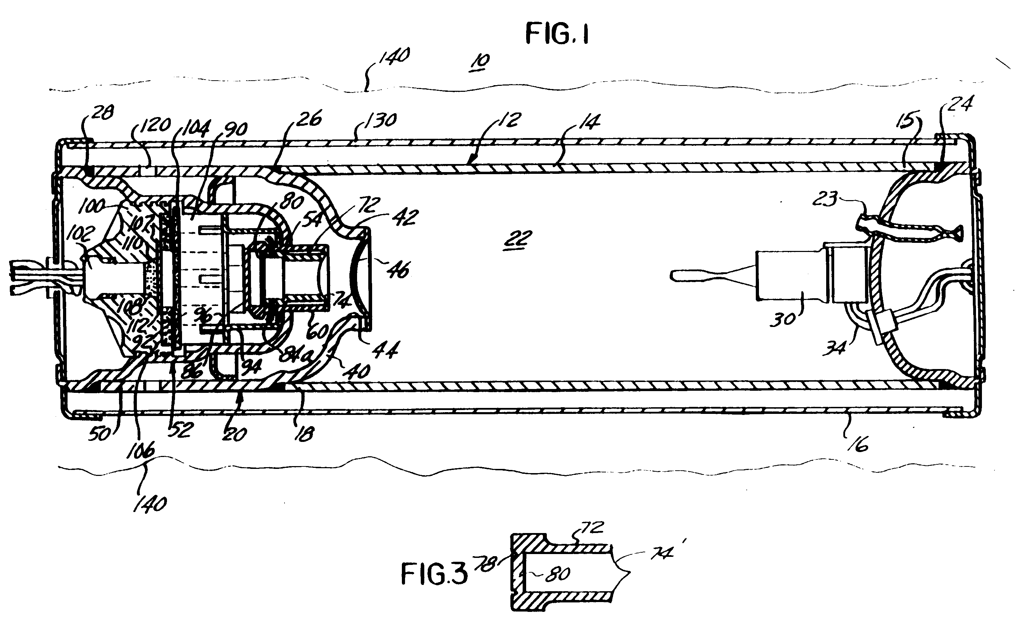

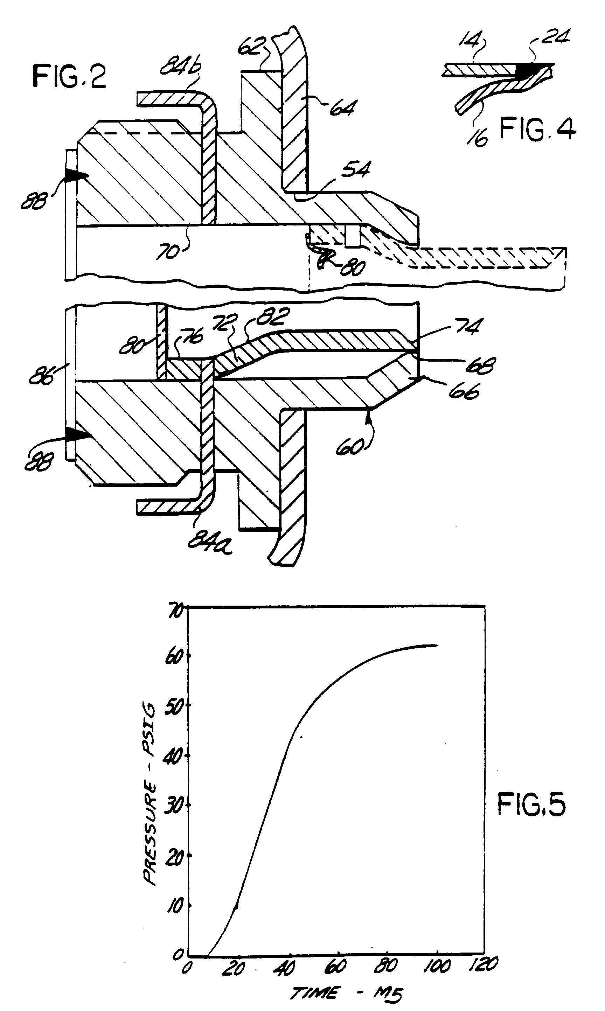

With reference to FIGURE 1 there is shown a hybrid inflator 10 for inflating an air cushion such as an air bag usable within a vehicle occupant safety restraint system. The inflator 10 comprises a pressure tank generally shown as 12. The pressure tank comprises three portions including a hollow cylindrical sleeve 14 secured at one end 15 to a first end cap 16. The sleeve is also secured at end 18 to another cylindrically shaped end cap 20. The pressurized tank 12, in the space shown as 22, is filled and pressurized with an inert gas such as Argon. This gas may be inserted and sealed within the pressure tank through a fill tube 23 of known design. The pressurized gas may also be a mixture of Argon and another inert gas such as helium. Typically the amount of helium is approximately two percent (2%) by volume of the amount of Argon gas. The purpose of using helium is to provide a means for detecting defects in any of the various weld joints such as 24, 26 or 28. FIGURE 4 illustrates a typical weld joint 24. It can be seen that the sleeve 14 is spaced from the end cap 16 to permit the unrestricted migration of the stored gas to the weld joint so that any defects in such joint can be immediately identified during the initial pressurization of the pressure tank 12. The test measures the presence of helium external of the inflator as known in the art.

An optional pressure sensor 30 may be secured to end cap 16. A seal such as a glass to metal seal is provided to seal an opening in the end cap 16 through which wires 34 associated with the pressure sensor are fed through. The end cap 20 includes a necked-down portion 40 facing the interior 22 of the pressure vessel. The end 42 of the end cap 20 is provided with an opening 44 which is closed by a rupturable, thin disk 46, preferably made of stainless steel, inconel or nickel. Secured to an end 50 of the end cap 20 is a gas generator housing generally shown as 52. The housing 52 extends partially within the end cap 20.

Positioned within an opening 54 within the housing 52 is a sleeve 60 which includes a flange 62 adjacent the forward portion 64 of the housing 52 (see FIGURE 2). The sleeve 60 includes a narrow mouth portion 66 proximate an opening 68. Positioned within the bore 70 formed within the sleeve 60 is a sliding piston generally shown as 72. As can be seen from the drawings, the piston 72 is hollow and includes at a forward end thereof a cutting edge 74. Positioned at the rear end 76 of the piston 72 is another burst disk 80 of similar construction to burst disk 46. The burst disk 80 encloses the hollow bore or opening 82 defined by the walls of the piston 72. The sliding piston 72 is initially retained within the sleeve 60 by shear pins 84a and 84b. An alternate embodiment of the piston 72 having a pointed cutting edge 74' is shown in FIGURE 3. In addition, FIGURE 3 shows the burst disk 80 being formed as an integral part of the piston 72. An annular groove 78 may be formed on the rear face of the disk 80 to selectively weaken same.

The rear of the sleeve 60 may be partially covered by a restraining strap 86 which may be secured such as by welding at locations 88 to the sleeve 60. This restraining strap may be a thin, narrow band or alternatively, a wire. The purpose of the restraining strap 86 will be clear from the description below. If a band is used, it is contemplated that it could be fabricated of stainless steel having a thickness of 1.27 mm (.050 inches) and a width of approximately 3.175 mm (.125 inches).

Positioned within the housing 52, and rearward of the sleeve 60, is a quantity of propellant material 90 (see FIGURE 1) such as Arcite disclosed in United States Patents 3,723,205 or 4,981,534. As is known in the art, Arcite can be extruded to a shape conformal with the housing 52. Similarly, as known in the art, the molded propellant 90 may include a plurality of axially extending passages such as 92 to control the burn rate of the propellant material 90. The propellant 90 is supported within the propellant housing 52 by a metal retainer 94 having a plurality of openings such as 96 coaxial with the openings 92 formed in the propellant 90.

An initiator housing 100 is secured to the propellant housing 52. Inserted within the initiator housing is an initiator or squib 102 of known variety which ignites in response to an electric control signal indicative of a crash situation. Squibs or initiators 102 or the like are well known in the art and are not described further herein.

Situated upstream of the ignitor 102 and within a small cavity 108 formed in the initiator housing 100 is a small quantity of ignition enhancing material 110 which may primarily consist of boron potassium nitrate. This ignition enhancing material may be sealed within the housing 100 by encapturing same by a thin metal foil layer 112.

Upon securement of the initiator housing 100 into the propellant housing 52, the propellant 90 is biased inwardly by action of a screen 104 which acts to uniformly distribute the heat, generated upon activation of the initiator 102, to the propellant 90. A sponge or spring element 106, preferably fabricated of a silicone sponge material, provides a modest preload on the propellant to maintain same in place. The resilient sponge element 106 includes an opening 107 so as not to interact with the flame produced by the squib 102.

The operation of the inflator 10 is as follows. The pressure tank 12 is initially filled to a pressure of between 138 bar (2,000 psi) and 276 bar (4,000 psi) with Argon/helium inflation gas, however, it has been found that an inflation pressure of approximately 207 bar (3,000 psi) is normal for the purpose of inflating many air bags. In this condition the burst disk 46 prevents egress of the inflation gases. In response to a signal indicative of a crash situation, the initiator 102 ignites thereby igniting the enhancing material 110 causing the propellant 90 to burn. As the propellant 90 burns, pressure is built up within the propellant housing 52 and acts on the rupture disk 80 secured to the sliding piston 72. This pressure which operates against the surface area of the burst disk 80 will build to a sufficient magnitude to create a force adequate to shear the shear pins 84a and b causing the sliding piston 72 to move within the sleeve 60 and puncture the burst disk 46. Upon puncturing the burst disk 46, the stored inflation gas immediately exits the orifice openings 120 in the end cap 20 and flows into a manifold 130 to inflate the air bag 140 which would typically be secured about the manifold in a known manner.

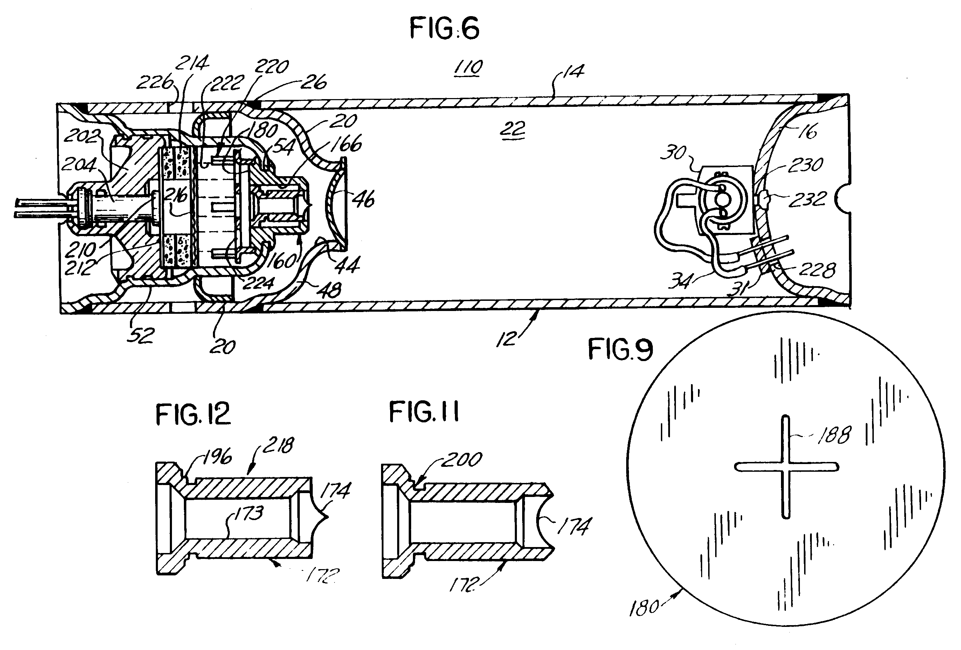

As can be appreciated, at this point in time the hot products of combustion resulting from the burning propellant have not yet mixed with the stored inflation gas and as such the puncturing of the burst disk 46 by the sliding piston 72 results in an initial, cold gas, gentle (low rate) deployment of the air bag as can be seen in the initial portions of the inflation time history as shown in FIGURE 5. The pressure within the propellant housing 52 continues to rise as a result of the burning propellant 90 until a predetermined rupture pressure of the burst disk 80 is achieved. Typically this pressure could be approximately 345 bar (5,000 psi). Subsequently, the hot gases generated by the propellant 90 are injected into the pressure tank 12 via the central bore 82 of the sliding piston 72. The injection of the hot propellant gases causes the gases exiting the orifice openings 120 in the end portion 40 of the pressure tank 12 to be heated, resulting in an increased rate of inflation of the air bag. This increased rate of inflation is also shown in FIGURE 5. Reference is again made to FIGURE 2, which shows the initial position of the piston 72 and also shows the stroked position of this piston (in phantom line). As previously mentioned, the sleeve 60 includes a narrowed portion 66 which upon movement of the piston 72 causes an interference fit with the piston 72 which serves to maintain the piston in its stroked position after it has opened the rupture disk 80. The restraining strap 86 (also shown in FIGURE 2) provides a retainment for the sliding piston 72 in the event that it should stroke in reverse direction after first being exposed to the pressure of the stored Argon gas upon rupture of the burst disk 46.

As can be seen from the above, the present invention provides a methodology for providing the staged deployment of an air bag by selectively choosing the rupture pressure of the burst disk 80. The significance of this is that the inflator 10 provides for the slow, early onset of air bag deployment which results in lower air bag deployment forces which is significant in relation to out-of-position occupants. In addition, any deployment doors used to enclose the air bag, in its stored condition, would also be subjected to these lower deployment forces when they are opened, thereby providing for a more controlled opening of the deployment door. In addition, with regard to small vehicles which may be characterized by a severe crash pulse signature requiring the more rapid deployment of the air bag, it can be seen that the rupture pressure of the burst disk 80 which permits the communication of the heated propellant gases with the stored Argon gas can be chosen so that the time between the initial soft inflation of the air bag and the more rapid inflation of the air bag due to the communication of the heated propellant gases with the stored Argon gas occurs relatively shortly thereafter.

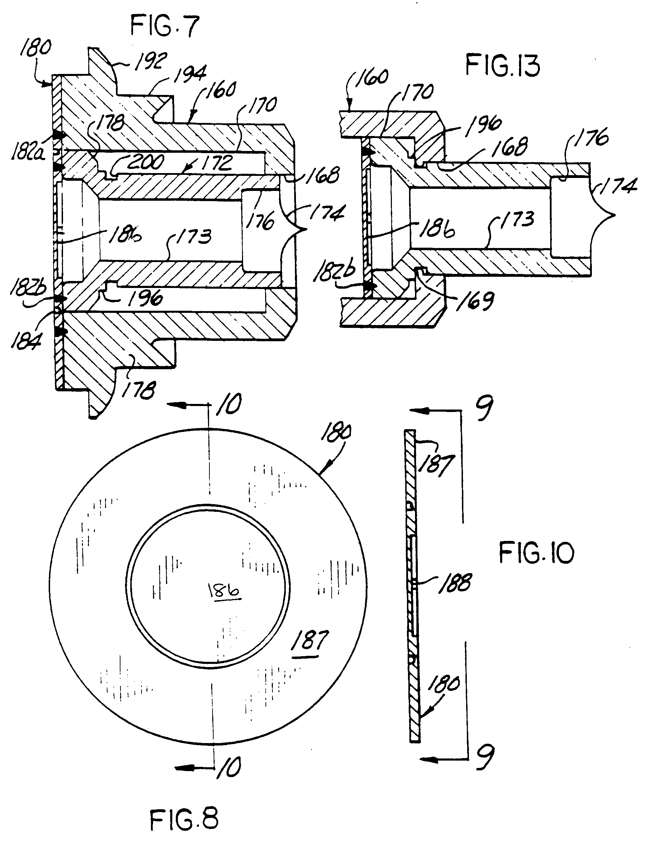

Reference is now made to FIGURE 6 which illustrates an alternative hybrid inflator 110. As will be appreciated from the description below, this hybrid inflator shares many common components with hybrid inflator 10 described above. The hybrid inflator 110 includes the pressure vessel 12 comprising cylindrical sleeve 14 enclosed by end caps 16 and 20. End cap 20 includes the necked down portion 40 defining opening 44 which is sealed by a rupture disk 46. Positioned within the inflator 110 apart from the Argon gas generally shown as 22, is a gas generator housing 52 defining an opening 54. Positioned within the opening 54 of the gas generator housing 52 is a sleeve 160 similar in function to sleeve 60 illustrated in FIGURE 1. The sleeve 160 includes a stepped bore 170 (see FIGURE 7) terminating at opening 168. Positioned within the bore 170 is is a hollow sliding piston 172. The piston 172 includes a cutting edge 174 which as described below penetrates the burst disk 46. The cutting edge 174 comprises two sharp points that taper to the full diameter of the piston. These points concentrate the available energy, creating localized stresses on the burst disk 46, and minimize the generator pressure required to drive the piston 172 through the burst disk 46. This action enhances the quick release of Argon gas 22. The face of the piston 172 is counter-bored at 176 so that standard inventory parts can be specially reamed to an appropriate up front diameter without disturbing the points. Under normal ambient temperature conditions, it can be appreciated that the diameter of bore 173 can effectively control the pressure in the gas generator which correspondingly controls the burn rate of the propellant. The control of the burn rate is effective in tailoring the rate of inflation of the air bag to the specific needs of the vehicle. The piston 172 also includes a central bore 173. The left end 178 or head of the piston 172 is slidingly received within the stepped bore 170. In the position as shown in FIGURE 6, the piston 172 is initially retained to the sleeve 160 by use of a shear disk 180. The shear disk may be laser welded to the sleeve at circular weld joints shown as 182a and 182b. An end view of the shear disk 180 is shown in FIGURE 8. The shear disk 180 includes a circular stress riser groove 184 which provides for the controlled separation of a central portion 186 of the disk from its outer portions 187 which faces the piston 172. The shear disk 180 also includes a second stress riser 188 as well as the diameter of the central portion 186 comprising intersecting grooves, which in the preferred embodiment takes the shape of an X or T (see FIGURE 9). This stress riser 188 determines the pressure at which the central portion 186 of the shear disk 180 will rupture due to the build-up of pressure on the face 189. A cross-sectional view of the shear disk 180 is shown in FIGURE 10.

Reference is again made to FIGURE 7 and in particular to the sleeve 160. As can be seen, the outer surface of the sleeve 160 is stepped. The sleeve includes an outer, arcuately shaped flange 192 having a shape that is generally conformal with the inner wall of the gas generator housing 52 proximate the central opening 54. The sleeve 160 also includes a second flange 194. In FIGURE 7 the flange 192 is shown in its pre-assembled condition. During assembly, the sleeve 160 with the rupture disk 180 and piston 172 are slid within opening 54 of the gas generator housing 52. Thereafter, the flange 194 is bent outwardly resulting to the configuration shown in FIGURE 6, thereby securing the sleeve 160 to the gas generator housing 52. This bending of flange 194 can be accomplished by a ring crimping technique which allows the flange 194 to be rolled over the wall of the generator housing.

Reference is made to FIGUREs 11 and 12 which illustrate various views of the piston 172 and more clearly show the cutting edges 174 formed thereon. As can be seen from FIGURE 12 as well as FIGURE 7, the piston includes a stepped annulus 196 the diameter of which is slightly larger than the diameter of the elongated portion 198 of the piston 172. The diameter of the annulus 196 is also slightly larger than the diameter of the opening 168 of the sleeve 160. The piston 172 also includes an annular groove 200. The purpose of the groove 200 and annulus 196 will be discussed below.

Reference is again made to FIGURE 6. As can be seen, the left hand portion of hybrid inflator 110 includes structure similar to the hybrid inflator 10 shown in FIGURE 1. More specifically, the inflator 110 includes an initiator housing 202, a squib 204 secured therein, a small quantity of ignition enhancing material 210 such as boron potassium nitrate, which is sealed to the housing 202 by a thin metal foil layer 212. Situated to the right of the initiator housing 202 is a sponge or spring element 214 and a screen 216 which provide the same function as spring element 106 and screen 104 of inflator 10. A quantity of molded or extruded propellant 218 is also placed within the gas generator housing 52 which is secured by the metal retainer 220. The propellant includes a plurality of axial passages 222 which are coaxial with openings 224 formed in the retainer 220. The ignition enhancing material 210 is designed to ignite at a lower temperature than the auto ignition temperature of the propellant 218. This feature assures that if the vehicle were involved in a fire or if the inflator itself were to burn, such as being placed in a disposal fire, that the propellant 218 is ignited at a low enough temperature that its burn rate and pressure generation is controlled through the piston nozzle, i.e., bore 173.

The operation of inflator 110 is similar to the operation of inflator 10. In response to a signal indicative of a crash situation, the initiator 204 ignites thereby igniting the material 210 causing the propellant 218 to burn. As the propellant 218 burns pressure is built up in the propellant housing 52 which acts on the shear disk 180. At a predetermined pressure, determined by the dimensions of the stress riser 184 the piston 172 and central portion 186 of the shear disk separates from the outer portion 187 of the shear disk 180. The central portion 186 remains attached to the piston 172. The piston 172 is propelled by the pressure into the burst disk 46 wherein the cutting edges 174 puncture the burst disk 46 permitting the stored Argon gas to flow through the now ruptured burst disk 46, between the end cap 20 and gas generator housing 52 and outwardly through openings 226 to begin to inflate the air bag.

Reference is briefly made to FIGURE 13. As may be recalled from the description above, the diameter of the opening 168 is sized to be smaller than the annulus 196 formed on the piston 172. This difference in dimension will provide for an interference fit between the piston 172 and sleeve 160. As can be appreciated, as the piston 172 is thrust forwardly by the pressure exerted thereon which may be 345 bar (5000 psi), the larger drawer annulus 196 impacts the sleeve 160 proximate opening 168 to create the interference fit and stops or decelerates the piston thereby reducing the stresses on the piston head. It is believed that as the annulus impacts the sleeve 160, the sleeve is slightly deformed about the opening 168 to create a ridge or burr 169. As mentioned earlier, the piston 172 includes an annular groove 200. This annular groove 200 is positioned slightly to the right of the piston head 174 and annulus 196. In the forward or burst disk piercing position shown in FIGURE 13, the groove 200 interferes with the burr 169 which is effective to prevent the piston from moving rearwardly thereby improving the retention of the piston in its stroked position.

Reference is again made to FIGURE 6. The inflator 110 may also include the pressure sensor 30 which will generate a low pressure signal as an associated switch opens or closes if the pressure of the Argon gas 22 has reduced below a defined level. A seal 31 such as a glass to metal seal is provided to seal an opening 228 in the end cap 16 through which the wires 34 of the pressure sensor are fed through. The end cap also includes another opening 230 and seal 232, comprising a metal ball, which replaces the fill tube 23 of FIGURE 1. In order to fill the pressure vessel 12 with Argon gas, the inflator 110 will be fit into a gas filling apparatus. More particularly, it is envisioned that the end cap 16 will be mated to this gas filling apparatus wherein pressurized Argon gas enters the pressure vessel 12 through opening 230. When a sufficient quantity of Argon gas has been inserted within the inflator 110, the filling apparatus will drop a metal ball into the end cap. With the pressure vessel 12 in a vertical position, the metal ball 232 will come to rest in the opening 230. Thereafter, an electrode associated with the filling apparatus will be moved into contact with the ball 232 and upon energization of the electrode, the ball 232 will be welded in place thereby sealing the inflator 110.

Many changes and modifications in the above described embodiment of the invention can, of course, be carried out without departing from the scope thereof. Accordingly, that scope is intended to be limited only by the scope of the appended claims.

## Claims

1. An inflator (10) comprising:
a pressure means (12,14,16,20) for storing a quantity of stored inflation gas under pressure, the pressure means comprising a first burst disk (46) in communication with the stored inflation gas and preventing egress of the gas from the chamber,
a sliding piston (72, 172) including at one end thereof first means (174) for puncturing the first burst disk (46),
a shear disk (180) having a stationary outer portion (187) and a central or inner portion (186) the central portion secured to one end of the piston (172) opposite the first means (174), the central portion capable of separating from the outer portion and moving with the piston (172), the central portion functioning as a second burst disk;
propellant material (90) provided near the second burst disk (80), said propellant producing gaseous combustion products when burned;
the piston being propelled into the first burst disk (46) after the central portion (186) of the shear disk separates from the outer portion (187) in response to the build up of pressure generated due to the burning of propellant material 218, thereby permitting the egress of the stored inflation gas, the central portion (186) or second burst disk being ruptured by the continued build up of pressure due to the burning propellant material whereupon after the rupturing of the second burst disk the heated products of combustion resulting from the burning propellant material flow past the sliding piston (172) to increase the temperature of the stored inflation gas prior to its exit from the inflator.

2. The inflator (10) as defined in Claim 1 wherein the pressure means (12) comprises a cylindrical sleeve (14), a first end cap (16) secured at one end (14) thereof and a second end cap (20) secured at another end (18) thereof, the second end cap (20) being of generally cylindrical shape and including a narrowed portion (40) extending into the sleeve (14), the narrowed portion defining a first opening (44), the first burst disk (46) being secured to the narrow portion to close the first opening (44), the second end cap (20) further including at least one orifice opening (226) through which gases escape upon the puncturing of the first burst disk (46).

3. The inflator as defined in Claim 1 wherein a propellant housing (52) is positioned with and generally spaced from the interior of the second end cap (20), the housing (52) including a second opening (54) facing the first burst disk (46).
a hollow sleeve member (160) is secured to the housing (52) and extends through the second opening (54), the sliding piston (172) is received within the sleeve member (160) and wherein the outer portion of the shear disk is secured to the sleeve member.

4. The inflator (110) as defined in Claim 3 wherein the shear disk (180) includes a stress riser (184) between the outer portion and central portion, the stress riser (184) providing a weakened region along with the central portion separates from the outer portion.

5. The inflator (110) as defined in Claim 4 wherein the shear disk (180) includes a second stress riser located within the central portion (186) defining a weakened region therein, the central portion or second burst disk opening along this region at a determinable pressure to allow the products of combustion of the burning propellant to mix with the stored inflation gas.

6. The inflator as defined in Claim 1 wherein the piston (172) and sleeve member (160) cooperate to provide an interference fit therebetween when the piston has moved to its burst disk piercing position, thereby preventing the piston from being moved backwardly by the escaping inflation gas.

7. The inflator (10) as defined in Claim 1 wherein the sliding piston (172) is hollow and the heated products of combination flow through the sliding piston to the pressure means.

## Patentansprüche

1. Aufblasvorrichtung (10), enthaltend:
ein Druckmittel (12, 14, 16, 20) zur Speicherung einer Menge gespeicherten Aufblasgases unter Druck, wobei das Druckmittel eine mit dem gespeicherten Aufblasgas in Verbindung stehende erste Berstscheibe (46) enthält, die Austritt des Gases aus der Kammer verhindert,
einen Schiebekolben (72, 172) mit einem ersten Mittel (174) an einem Ende davon zum Durchbohren der ersten Berstscheibe (46),
eine Scherscheibe (180) mit einem feststehenden äußeren Teil (187) und einem mittleren oder inneren Teil (186), wobei der mittlere Teil an einem Ende des Kolbens (172) gegenüber dem ersten Mittel (174) befestigt ist und vom äußeren Teil abgetrennt werden und sich mit dem Kolben (172) bewegen kann, und wobei der mittlere Teil als eine zweite Berstscheibe wirkt;
Treibmittelmaterial (90), das in der Nähe der zweiten Berstscheibe (80) vorgesehen ist, wobei das Treibmittel bei Verbrennung gasförmige Verbrennungsprodukte erzeugt;
wobei der Kolben nach der Trennung des mittleren Teils (186) der Scherscheibe vom äußeren Teil (187) als Reaktion auf den Aufbau von aufgrund der Verbrennung von Treibmittelmaterial (218) erzeugtem Druck in die erste Berstscheibe (46) getrieben wird, wodurch der Austritt des gespeicherten Aufblasgases gestattet wird, wobei der mittlere Teil (186) oder die zweite Berstscheibe durch den fortdauernden Druckaufbau aufgrund von brennendem Treibmittelmaterial zerbirst, wobei die von dem brennenden Treibmittelmaterial stammenden, erwärmten Verbrennungsprodukte nach dem Zerbersten der zweiten Berstscheibe am Schiebekolben (172) vorbeiströmen und die Temperatur des gespeicherten Aufblasgases vor seinem Austritt aus der Aufblasvorrichtung erhöhen.

2. Aufblasvorrichtung (10) nach Anspruch 1, bei der das Druckmittel (12) eine zylindrische Hülse (14), eine an einem Ende (14) davon befestigte erste Endkappe (16) und eine an einem anderen Ende (18) davon befestigte zweite Endkappe (20) enthält, wobei die zweite Endkappe (20) allgemein zylindrischer Form ist und einen verengten Teil (40) aufweist, der sich in die Hülse (14) erstreckt und eine erste Öffnung (44) definiert, wobei die erste Berstscheibe (46) an dem schmalen Teil befestigt ist und die erste Öffnung (44) verschließt und die zweite Endkappe (20) weiterhin mindestens eine Öffnung (226) enthält, durch die beim Durchbohren der ersten Berstscheibe (46) Gase entweichen.

3. Aufblasvorrichtung nach Anspruch 1, bei der ein Treibmittelgehäuse (52) im Innern der zweiten Endkappe (20) angeordnet und allgemein davon beabstandet ist und eine zur ersten Berstscheibe (46) weisende zweite Öffnung (54) enthält,
ein hohles Hülsenglied (160) am Gehäuse (52) befestigt ist und sich durch die zweite Öffnung (54) erstreckt,
der Schiebekolben (172) im Hülsenglied (160) aufgenommen ist und
der äußere Teil der Scherscheibe am Hülsenglied befestigt ist.

4. Aufblasvorrichtung (110) nach Anspruch 3, bei der die Scherscheibe (180) zwischen dem äußeren Teil und dem mittleren Teil ein Belastungserhöhungsmittel (184) enthält, das einen geschwächten Bereich bildet, entlang dem der mittlere Teil von dem äußeren Teil getrennt wird.

5. Aufblasvorrichtung (110) nach Anspruch 4, bei der die Scherscheibe (180) ein zweites Belastungserhöhungsmittel enthält, das sich im mittleren Teil (186) befindet und darin einen geschwächten Bereich definiert, wobei sich der mittlere Teil oder die zweite Berstscheibe bei einem bestimmbaren Druck entlang diesem Bereich öffnen und gestatten, daß sich die Verbrennungsprodukte des brennenden Treibmittels mit dem gespeicherten Aufblasgas vermischen.

6. Aufblasvorrichtung nach Anspruch 1, bei der der Kolben (172) und das Hülsenglied (160) so zusammenwirken, daß dazwischen eine Preßpassung gebildet wird, wenn sich der Kolben in seine Berstscheibendurchsteckstellung bewegt hat, wodurch verhindert wird, daß der Kolben durch das entweichende Aufblasgas nach hinten bewegt wird.

7. Aufblasvorrichtung (10) nach Anspruch 1, bei der der Schiebekolben (172) hohl ist und die erwärmten Verbrennungsprodukte durch den Schiebekolben zum Druckmittel strömen.

## Revendications

1. Gonfleur (1) comprenant :
un moyen de pression (12, 14, 16, 20) pour stocker une quantité de gaz de gonflage sous pression stocké, le moyen de pression comprenant un premier diaphragme d'éclatement (46) en communication avec le gaz de gonflage stocké et empêchant la sortie du gaz hors de la chambre,
un piston coulissant (72, 172) comportant à une de ses extrémités un premier moyen (174) pour perforer le premier diaphragme d'éclatement (46),
un disque de cisaillement (180) ayant une portion externe stationnaire (187) et une portion centrale ou interne (186), la portion centrale étant fixée à une extrémité du piston (172) en regard du premier moyen (174), la portion centrale étant capable de se séparer de la portion externe et de se déplacer avec le piston (172), la portion centrale fonctionnant comme un second diaphragme d'éclatement;
un matériau propulseur (90) prévu à proximité du second diaphragme d'éclatement (80), ledit propulseur produisant des produits de combustion gazeux lors de sa combustion;
le piston étant propulsé dans le premier diaphragme d'éclatement (46) après que la portion centrale (186) du disque de cisaillement se soit séparée de la portion externe (187) en réponse à l'accumulation de pression générée à la suite de la combustion de matériau propulseur 218, permettant ainsi la sortie du gaz de gonflage stocké, la portion centrale (186) ou le second diaphragme d'éclatement éclatant sous l'effet de l'accumulation continue de pression due à la combustion de matériau propulseur, à la suite de quoi, après la rupture du second diaphragme d'éclatement, les produits de combustion chauffés à la suite de la combustion de matériau propulseur s'écoulent au-delà du piston coulissant (172) pour augmenter la température du gaz de gonflage stocké avant sa sortie du gonfleur.

2. Gonfleur (10) selon la revendication 1, dans lequel le moyen de pression (12) comprend un manchon cylindrique (14), une première capsule d'extrémité (16) fixée à une extrémité (14) de celui-ci, et une seconde capsule d'extrémité (20) fixée à une autre extrémité (18) de celui-ci, la seconde capsule d'extrémité (20) ayant une forme généralement cylindrique et comportant une portion étroite (40) s'étendant dans le manchon (14), la portion étroite définissant une première ouverture (44), le premier diaphragme d'éclatement (46) étant fixé à la portion étroite pour fermer la première ouverture (44), la seconde capsule d'extrémité (20) comportant en outre au moins une ouverture d'orifice (226) à travers laquelle les gaz s'échappent lors de la perforation du premier diaphragme d'éclatement (46).

3. Gonfleur selon la revendication 1, dans lequel un logement de propulseur (52) est positionné à l'intérieur et généralement espacé de l'intérieur de la seconde capsule d'extrémité (20), le logement (52) comportant une seconde ouverture (54) en regard du premier diaphragme d'éclatement (46).
un organe de manchon creux (160) est fixé au logement (52) et s'étend à travers la seconde ouverture (54), le piston coulissant (172) est reçu à l'intérieur de l'organe de manchon (160) et dans lequel la portion externe du disque de cisaillement est fixée à l'organe de manchon.

4. Gonfleur (110) selon la revendication 3, dans lequel le disque de cisaillement (180) comporte un moyen d'accroissement de contrainte (184) entre la portion externe et la portion centrale, le moyen d'accroissement de contrainte (184) fournissant une région affaiblie le long de laquelle la portion centrale se sépare de la portion externe.

5. Gonfleur (110) selon la revendication 4, dans lequel le disque de cisaillement (180) comporte un second moyen d'accroissement de contrainte situé à l'intérieur de la portion centrale (186) définissant une région affaiblie dans celle-ci, la portion centrale ou le second diaphragme d'éclatement s'ouvrant le long de cette région à une pression déterminable pour permettre aux produits de la combustion du propulseur brûlant de se mélanger avec le gaz de gonflage stocké.

6. Gonfleur selon la revendication 1, dans lequel le piston (172) et l'organe de manchon (160) coopèrent pour fournir un joint à ajustement serré entre eux lorsque le piston s'est déplacé jusque dans sa position de perçage du diaphragme d'éclatement, empêchant ainsi le piston d'être déplacé vers l'arrière par l'échappement du gaz de gonflage.

7. Gonfleur (10) selon la revendication 1, dans lequel le piston coulissant (172) est creux et les produits chauffés de la combustion s'écoulent à travers le piston coulissant jusqu'au moyen de pression.
